# EUROPEAN PATENT SPECIFICATION

(11) **EP 3 347 604 B1**
(45) Date of publication and mention of the grant of the patent: **03.03.2021**
(21) Application number: 16843725.9
(22) Date of filing: 04.08.2016
(51) Int. Cl.: F16B 7/06, F16G 11/12, F16B 39/28

(54) **MECHANISM FOR LOCKING A TURNBUCKLE**
MECHANISMUS ZUM VERRIEGELN EINES SPANNSCHLOSSES
MÉCANISME POUR VERROUILLER UN TENDEUR

(30) Priority: 11.09.2015 FI 20155650
(43) Date of publication of application: 18.07.2018
(73) Proprietor: MacGregor Finland Oy, 20780 Kaarina (FI)
(72) Inventor: ÖSTBERG, Juhana, 20810 Turku (FI)
(74) Representative: Papula Oy
(86) International application number: PCT/FI2016/050548
(87) International publication number: WO 2017/042426

(56) References cited:
- EP-A1- 1 805 077
- EP-B1- 1 534 584
- DE-A1- 10 108 519
- DE-U1- 20 203 067
- KR-A- 20130 085 770
- US-B1- 6 908 268

## Description

The object of this invention is a turnbuckle, which comprises a screw rod provided with a thread, and a frame part that is provided with a corresponding thread and is rotatable in relation to the screw rod, which frame part has vertical bars, and on the top end of which screw rod a retainer is installed, and installed at least one vertical bar is a locking means that slides in the direction of the vertical bar and that in its locking position collides with the retainer on the screw rod and prevents movement of the frame part around the screw rod.

The invention thus relates to a turnbuckle with which it is endeavored to prevent unintended loosening, e.g. caused by vibration of the ship's hull, of a turnbuckle being used for tightening a lashing rod. Lashing rods are used more particularly on cargo ships for securing containers to a lashing bridge or to the ship's hull.

A turnbuckle is composed of a screw rod and a frame part, which are connected to each other by means of a thread. The lashing rod is tightened or loosened by means of the turnbuckle by rotating the frame part in relation to the screw rod. One problem is that e.g. the vibration of the ship unintentionally tries to loosen a turnbuckle. Various locking mechanisms have been developed for preventing this.

One such solution is presented in Finnish patent 122999, wherein rotational movement is prevented by means of toothed pieces and a pretensioning means.

Publication EP 1805077 B1 presents a turnbuckle, in which the frame part is rotated in relation to the screw rod, between which frame part and screw rod is installed a coupling part, which by snap action enables rotational movement between the parts at least in the tightening direction and resists movement in the opposite direction.

Additionally, publication EP 2444692 B1 presents a locking mechanism that is known in the art.

Further, EP 1534584 B1 discloses an arrangement for lashing containers on deck ships. The arrangement comprises a threaded spindle and a releasable rotation-prevention means provided in an unloaded area of the threaded spindle.

The structures in these solutions that are known in the art are complex and they have many moving parts, in which case manufacturing costs are also high. During use the operation of springs and other small parts can be disturbed by detritus or corrosion.

The aim of the current invention is to achieve a new type of a turnbuckle, which is not conjoined with the problems occurring in known solutions. The turnbuckle according to the invention is characterized in that that the locking means is shaped and dimensioned in such a way that it is possible for the bottom end of a lashing bar connected to the turnbuckle to extend in its extreme position up to the top end of the screw rod without the locking means preventing this, regardless of the attitude and height position of the locking means..

One preferred embodiment of the mechanism according to the invention is characterized in that the locking means is situated on the side of the center line of the turnbuckle in such a way that no point of the locking means is situated on the imaginary extension of the screw rod as viewed in the upward direction of the screw rod.

Another preferred embodiment of the mechanism according to the invention is characterized in that the locking means is a cylindrical sleeve installed on a vertical bar and sliding in the direction of the vertical bar.

Yet another preferred embodiment of the mechanism according to the invention is characterized in that there are two units of locking means, one installed on each vertical bar.

One advantage of the invention that can be mentioned is that the locking function is automatic, i.e. the locking means drops into the lower position (locking position) by the effect of gravity. Thus the structure of the turnbuckle according to the invention is inexpensive and operationally reliable. In addition, the small outer dimensions and the location of the lock sleeve enable a larger range of length adjustment or a shorter structure for the turnbuckle itself.

In the following, the invention will be described in more detail by the aid of some preferred embodiments with reference to the attached drawings, wherein
Fig. 1 presents a turnbuckle according to the invention.
Fig. 2 presents a detail of a turnbuckle according to the invention when the locking means has been raised.
Fig. 3 presents a detail of a turnbuckle according to the invention when the locking means is in the locking position.
Fig. 4 presents another embodiment of the locking means.
Fig. 5 presents a third embodiment of the locking means.
Fig. 6 presents the turnbuckle according to the invention in a position in which the bottom end of the lashing bar is as close as possible to the top end of the screw rod.

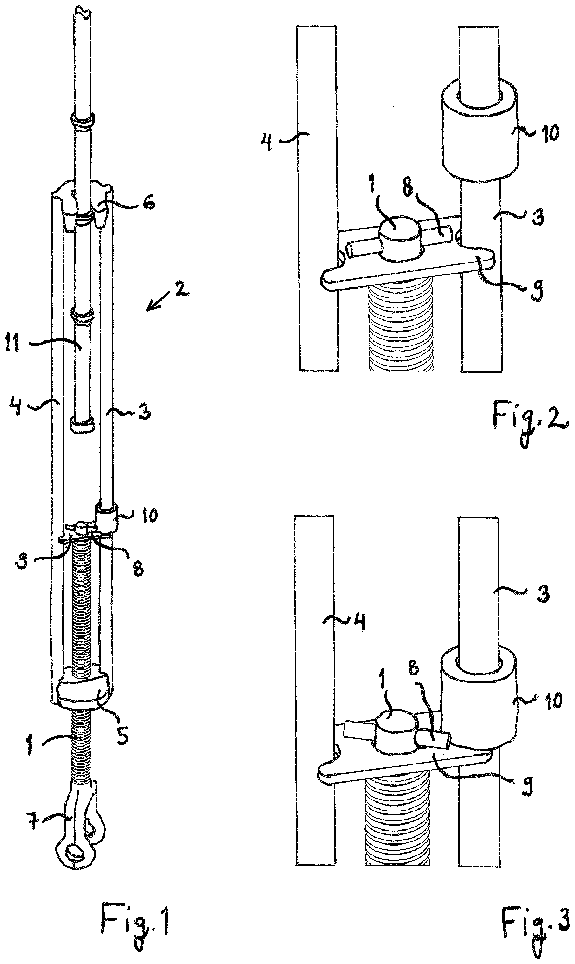

Fig. 1 thus presents a turnbuckle according to the invention, the main components of which are a screw rod 1 and a frame part 2. The frame part is composed of two vertical bars 3 and 4, a flange 5 and a slot part 6. A hole is made in the flange 5 of the frame part 2, which hole has an internal thread that matches the external thread of the screw rod. The flange 5 functions as a counterpart of the screw rod, enabling adjustment of the length of the turnbuckle by rotating the frame part 2 in relation to the screw rod 1. The slot part 6 at the top end of the frame part 2 enables connection of a lashing bar 11 to the turnbuckle. The screw rod 1 in turn has a fixed jaw 7, from which the screw rod 1 is fixed to its base, such as to a lashing bridge or to the hull of the ship.

A retainer is installed on the top end of the screw rod 1, which retainer is in this case a transverse retainer pin 8. The top end of the screw rod is also supported with a separate support plate 9 on the vertical rods 3 and 4 of the frame part 2. The screw rod is able to rotate freely in relation to the support plate 9 because there is a hole with clearance in the support plate. The support plate 9 is, in turn, able to slide in relation to the vertical bars 3 and 4 in their longitudinal direction.

A locking means is installed on the second vertical bar 3, which locking means is in this case a sleeve 10, which is able to slide freely in the direction of the vertical bar 3. When it is desired to adjust the length of the turnbuckle, i.e. to tighten or loosen the turnbuckle, the sleeve 10 is raised (Fig. 2), i.e. out of the locking position, and the frame part 2 is rotated around the screw rod 1. The vertical bars 3 and 4 thus fit to rotate around the retainer pin 8. After adjustment of the length, the sleeve is allowed to drop under the effect of gravity into its lower position, i.e. into the locking position (Fig. 3). When the tightened turnbuckle endeavors to loosen, e.g. due to the vibration of the ship, the sleeve 10 on the bottom end of the vertical bar 3 collides with and stops on the retainer pin 8 on the screw rod 1. In this case the frame part 2 is not therefore able to rotate around the screw rod 1 and the turnbuckle will not lose its set tightness.

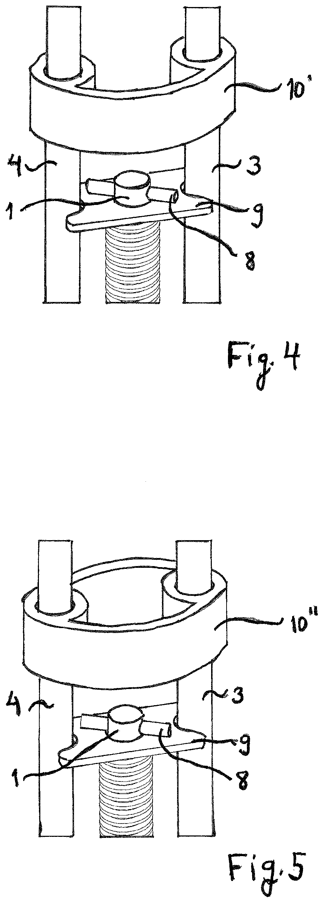

Figs. 4 and 5 present two different embodiments, in which the locking mechanism is implemented with one larger component 10', 10", which slides guided by the vertical bars 3 and 4 and in the direction of them, and which in its lower position prevents loosening of the turnbuckle. In Figs. 4 and 5 the component 10', 10" is presented in its raised position, in which therefore rotation of the frame part 2 in relation to the screw rod 1 is possible.

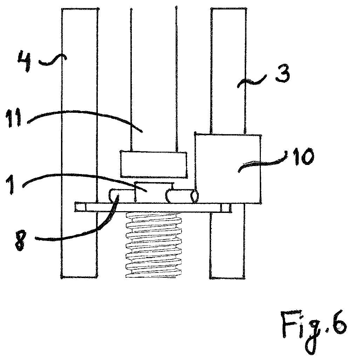

Fig. 6 presents the turnbuckle according to the invention in a position in which the bottom end of a lashing bar 11 is close to the top end of the screw rod 1. This is achieved by shaping and dimensioning the locking means 10 to enable this extreme position. The locking means is thus situated on the side of the center line of the turnbuckle in such a way that no point of the locking means is situated on the imaginary extension of the screw rod 1 as viewed in the upward direction of the screw rod. The same is, of course, possible also in the embodiments presented by Figs. 4 and 5.

It is obvious to the person skilled in the art that the invention is not limited to the embodiments presented above, but that it can be varied within the scope of the claims presented below. The turnbuckle according to the invention can also be implemented with two or more separate sleeves 10, in which case there is one or more sleeves 10 on one or on both of the vertical rods 3 and 4. In this description the retainer is a retainer pin 8, but it can be some other kind of part suited to the same purpose or a shape, such as a cavity or groove, that functions in the manner of a retainer and is made directly in the end of the screw rod 1. For example, the diameter of the sleeve can be larger to the extent the sleeve extends directly into a cavity in the top end of the screw rod.

The characteristic features possibly presented in the description in conjunction with other characteristic features can also, if necessary, be used separately to each other.

## Claims

1. Turnbuckle, which comprises a screw rod (1) provided with a thread and a frame part (2) that is provided with a corresponding thread and is rotatable in relation to the screw rod, which frame part has vertical bars (3, 4), and on the top end of which screw rod (1) a retainer (8) is installed, and installed on at least one vertical bar (3, 4) is a locking means (10, 10', 10") that slides in the direction of the vertical bar, and that in its locking position collides with the retainer (8) on the screw rod (1) and prevents movement of the frame part (2) around the screw rod (1), **characterized in that** the locking means (10, 10', 10") is shaped and dimensioned in such a way that it is possible for the bottom end of a lashing bar (11) connected to the turnbuckle to extend in its extreme position up to the top end of the screw rod (1) without the locking means preventing this, regardless of the attitude and height position of the locking means.

2. Turnbuckle according to claim 1, **characterized in that** the locking means (10, 10', 10") is situated on the side of the center line of the turnbuckle in such a way that no point of the locking means is situated on the imaginary extension of the screw rod (1) as viewed in the upward direction of the screw rod.

3. Turnbuckle according to claims 1 or 2, **characterized in that** the locking means is a cylindrical sleeve (10) installed on a vertical bar and sliding in the direction of the vertical bar.

4. Turnbuckle according to any of claims 1-3, **characterized in that** there are two units of locking means (10), one installed on each vertical bar.

5. Turnbuckle according to any of claims 1-3, **characterized in that** there are a number of locking means (10), installed on one or on both of the vertical bars (3, 4).

6. Turnbuckle according to claim 1 or 2, **characterized in that** the locking means (10', 10") is an integral component that is supported on both vertical bars and that slides in the direction of the vertical bars (3, 4).

7. Turnbuckle according to any of the previous claims, **characterized in that** the top end of the screw rod (1) is supported with a separate support plate (9) being able to slide in relation to the vertical bars (3, 4) and serving as a support for the locking means (10, 10', 10") in the locking position.

8. Turnbuckle according to claim 7, **characterized in that** the locking means (10, 10', 10") drops into the locking position by the effect of gravity and the locking position is a position in which the locking means (10, 10', 10") contacts the plate (9).

## Patentansprüche

1. Spannschloss, das eine Gewindestange (1) mit einem Gewinde und ein Rahmenteil (2), das mit einem entsprechenden Gewinde versehen und drehbar gegenüber der Gewindestange ist, umfasst, wobei das Rahmenteil vertikale Stangen (3, 4) aufweist, und an dessen oberem Ende der Gewindestange (1) eine Halterung (8) angebracht ist, und an mindestens einer vertikalen Stange (3, 4) ein Verriegelungsmittel (10, 10', 10") angebracht ist, das in Richtung der vertikalen Stange gleitet, und das in der Verriegelungsposition mit der Halterung (8) an der Gewindestange (1) kollidiert und eine Bewegung des Rahmenteils (2) um die Gewindestange (1) verhindert, **dadurch gekennzeichnet, dass** das Verriegelungsmittel (10, 10', 10") so geformt und dimensioniert ist, dass es möglich ist, dass das untere Ende einer mit dem Spannschloss verbundenen Zurrstange (11) in seiner Endstellung bis zum oberen Ende der Gewindestange (1) reicht, ohne dass das Verriegelungsmittel dies verhindert, unabhängig von der Stellung und Höhenlage des Verriegelungsmittels.

2. Spannschloss nach Anspruch 1, **dadurch gekennzeichnet, dass** das Verriegelungsmittel (10, 10', 10") auf der Seite der Mittellinie des Spannschlosses derart angeordnet ist, dass kein Punkt des Verriegelungsmittels auf der gedachten Verlängerung der Gewindestange (1), betrachtet in Aufwärtsrichtung der Gewindestange, angeordnet ist.

3. Spannschloss nach Anspruch 1 oder 2, **dadurch gekennzeichnet, dass** das Verriegelungsmittel eine zylindrische Hülse (10) ist, die auf einer vertikalen Stange angebracht ist und in Richtung der vertikalen Stange gleitet.

4. Spannschloss nach einem der Ansprüche 1-3, **dadurch gekennzeichnet, dass** zwei Einheiten von Verriegelungsmitteln (10) vorhanden sind, von denen jeweils eine an jeder vertikalen Stange angeordnet ist.

5. Spannschloss nach einem der Ansprüche 1-3, **dadurch gekennzeichnet, dass** eine Anzahl von Verriegelungsmitteln (10) vorhanden ist, die an einer oder an beiden der vertikalen Stangen (3, 4) angebracht sind.

6. Spannschloss nach Anspruch 1 oder 2, **dadurch gekennzeichnet, dass** das Verriegelungsmittel (10', 10") eine integrale Komponente ist, die sich an beiden vertikalen Stangen abstützt und in Richtung der vertikalen Stangen (3, 4) gleitet.

7. Spannschloss nach einem der vorhergehenden Ansprüche, **dadurch gekennzeichnet, dass** das obere Ende der Gewindestange (1) mit einer separaten Stützplatte (9) abgestützt ist, die gegenüber den vertikalen Stangen (3, 4) gleiten kann und als Abstützung für die Verriegelungsmittel (10, 10', 10") in der Verriegelungsposition dient.

8. Spannschloss nach Anspruch 7, **dadurch gekennzeichnet, dass** das Verriegelungsmittel (10, 10', 10") durch die Wirkung der Schwerkraft in die Verriegelungsposition fällt und die Verriegelungsposition eine Position ist, in der das Verriegelungsmittel (10, 10', 10") die Platte (9) berührt.

## Revendications

1. Tendeur qui comprend une tige de vis (1) prévue avec un filetage et une partie de bâti (2) qui est prévue avec un filetage correspondant et peut tourner par rapport à la tige de vis, laquelle partie de bâti a des barres verticales (3, 4) et sur l'extrémité supérieure de cette tige de vis (1), est installé un dispositif de retenue (8), et installé sur au moins une barre verticale (3, 4), on trouve un moyen de verrouillage (10, 10', 10") qui coulisse dans la direction de la barre verticale, et qui, dans sa position de verrouillage, entre en collision avec le dispositif de retenue (8) sur la tige de vis (1) et empêche le mouvement de la partie de bâti (2) autour de la tige de vis (1), **caractérisé en ce que** le moyen de verrouillage (10, 10', 10") est formé et dimensionné de sorte qu'il est possible que l'extrémité inférieure d'une barre d'arrimage (11) raccordée au tendeur s'étende dans sa position extrême jusqu'à l'extrémité supérieure de la tige de vis (1) sans que le moyen de verrouillage l'en empêche, indépendamment de l'attitude et de la position de hauteur du moyen de verrouillage.

2. Tendeur selon la revendication 1, **caractérisé en ce que** le moyen de verrouillage (10, 10', 10") est situé sur le côté de la ligne centrale du tendeur de sorte qu'aucun point du moyen de verrouillage n'est situé sur l'extension imaginaire de la tige de vis (1) en regardant dans la direction ascendante de la tige de vis.

3. Tendeur selon les revendications 1 ou 2, **caractérisé en ce que** le moyen de verrouillage est un manchon cylindrique (10) installé sur une barre verticale et coulissant dans la direction de la barre verticale.

4. Tendeur selon l'une quelconque des revendications 1 à 3, **caractérisé par** la présence de deux unités de moyen de verrouillage (10), l'une installée sur chaque barre verticale.

5. Tendeur selon l'une quelconque des revendications 1 à 3, **caractérisé par** la présence d'un certain nombre de moyens de verrouillage (10), installés sur l'une des barres verticales (3, 4) ou sur les deux.

6. Tendeur selon la revendication 1 ou 2, **caractérisé en ce que** le moyen de verrouillage (10', 10") est un composant solidaire qui est supporté sur les deux barres verticales et qui coulisse dans la direction des barres verticales (3, 4).

7. Tendeur selon l'une quelconque des revendications précédentes, **caractérisé en ce que** l'extrémité supérieure de la tige de vis (1) est supportée avec une plaque de support (9) séparée qui peut coulisser par rapport aux barres verticales (3, 4) et servant de support pour le moyen de verrouillage (10, 10', 10") dans la position de verrouillage.

8. Tendeur selon la revendication 7, **caractérisé en ce que** le moyen de verrouillage (10, 10', 10") tombe dans la position de verrouillage sous l'effet de gravité et la position de verrouillage est une position dans laquelle le moyen de verrouillage (10, 10', 10") est en contact avec la plaque (9).
